(19) Europäisches Patentamt

European Patent Office

Office européen des brevets

(11) Publication number: **0 033 722**
**B1**

(12) **EUROPEAN PATENT SPECIFICATION**

(45) Date of publication of patent specification: **02.05.85**

(21) Application number: **81830008.9**

(22) Date of filing: **20.01.81**

(51) Int. Cl.⁴: **G 01 B 5/25,** G 01 B 5/14, H 01 Q 1/12

(54) **Mechanical system for the adjustment of the axial distance and for the axial alignment of a feed with respect to a parabolic antenna.**

(30) Priority: **01.02.80 IT 4777580**

(43) Date of publication of application:
**12.08.81 Bulletin 81/32**

(45) Publication of the grant of the patent:
**02.05.85 Bulletin 85/18**

(84) Designated Contracting States:
**DE FR GB NL SE**

(56) References cited:
**AU-A- 454 772**
**CH-A- 80 247**
**US-A-2 634 939**
**US-A-2 815 582**
**US-A-3 664 029**
**US-A-3 854 216**

(73) Proprietor: **SELENIA INDUSTRIE ELETTRONICHE ASSOCIATE S.p.A.**
**Via Tiburtina, KM 12.400**
**I-00131 Roma (IT)**

(72) Inventor: **Mannella, Gino**
**Via Appia Nuova, 566**
**I-00181 Roma (IT)**
Inventor: **Corsi, Umberto**
**Via G. Marradi, 18**
**I-00137 Roma (IT)**

(74) Representative: **Gustorf, Gerhard, Dipl.-Ing.**
**Mühlenstrasse 1**
**D-8300 Landshut (DE)**

Courier Press, Leamington Spa, England.

## Description

The present invention concerns a mechanical system for the adjustment of the axial distance and for the axial alignment of a feed with respect to a parabolic antenna.

A parabolic antenna consists of a paraboloid and an illuminator or "feed" which must be correctly positioned in correspondence with the focus of the parabola within a very narrow tolerance.

Usually a parabolic antenna consists of a supporting structure to which the paraboloid or reflector is fixed and a tripod structure which supports the feed fastened by means of adjustment screws or equivalent structures to the said support. The adjustment of the feed position is carried out by regulating the above-mentioned adjustment screws in such a way that the feed is correctly positioned with respect to the focus of the parabola.

The positioning of the feed with respect to the paraboloid has three degrees of freedom and consequently, up to now this alignment was carried out by using an auxiliary optical system which included three theodolites, optical prisms and displacement tables in the X, Y planes of a reference X, Y.

This well known technique is very expensive since it requires the use of three very expensive theodolites and the use of special optical equipment such as prisms. Furthermore, it is necessary to have ample space available and this tends to impede the use of this technique in field operations.

US—A—2634 939 concerns a shaft-alignment mechanism without any reference to parabolic antennas. In this prior art, two dial indicators are fixed to a shaft which should be aligned. The stem of one of the indicators bears against the periphery of the other shaft while the stem of the second indicator bears against a radial surface of the second shaft. In this position, both shafts are turned and readings are taken every 90 degrees.

A similar device is disclosed in US—A—3 664 029 concerning a blocking structure for a comparator for verifying the misalignment of the axis of mechanical shafts.

The object of the present invention is to provide a mechanical system for the correct positioning of the feed of a parabolic antenna with respect to said antenna which does not require complicated equipments or a large amount of space and which is simple in use.

According to the invention, this object is achieved by a set of devices for coarse positioning comprising a first cylindrical column to be mounted on the antenna in a position coaxial with the axis of the parabolic antenna, a second cylindrical column to be mounted on the feed in a position coaxial with the axis of the feed, a cylindrical sleeve telescopically slidable on said columns and a spacer element which, together with said sleeve, determines roughly the desired axial distance between the feed and the antenna, and by a further set of devices for precise positioning comprising two micrometric gauges.

The space necessary for the system of this invention is only that represented by the space between the paraboloid and the feed.

Preferably, the further set of devices for precise positioning includes a mounting member holding said two micrometric gauges having respective calipers which member is, in use, substituted for said cylindrical sleeve and is mounted rotatably around the axis of said first column, the calipers of said gauges contacting the outer surface of said second column in two axially spaced points and including further an axial distance gauge which, in use, is substituted for said spacer element and is inserted between said first and said second column.

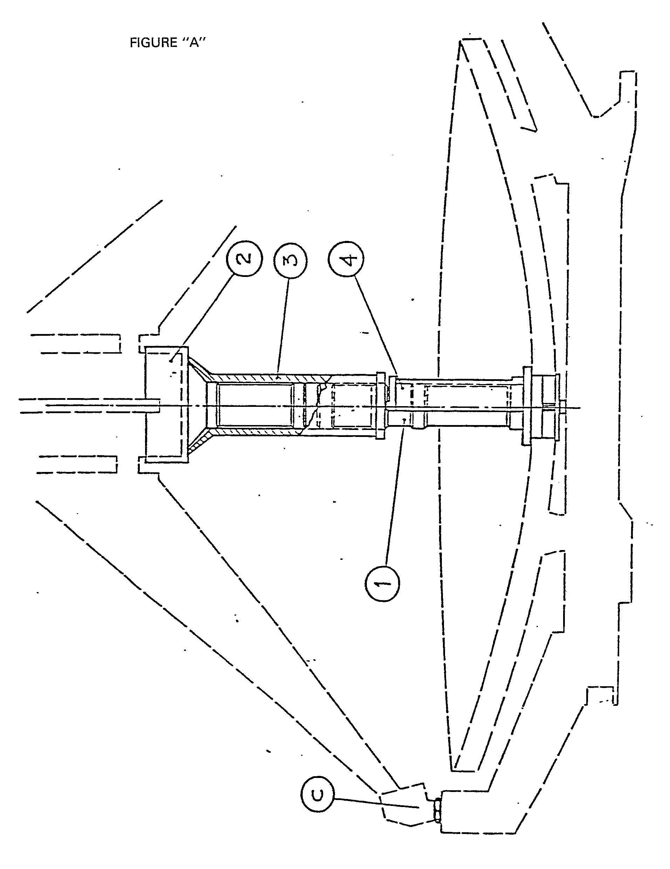

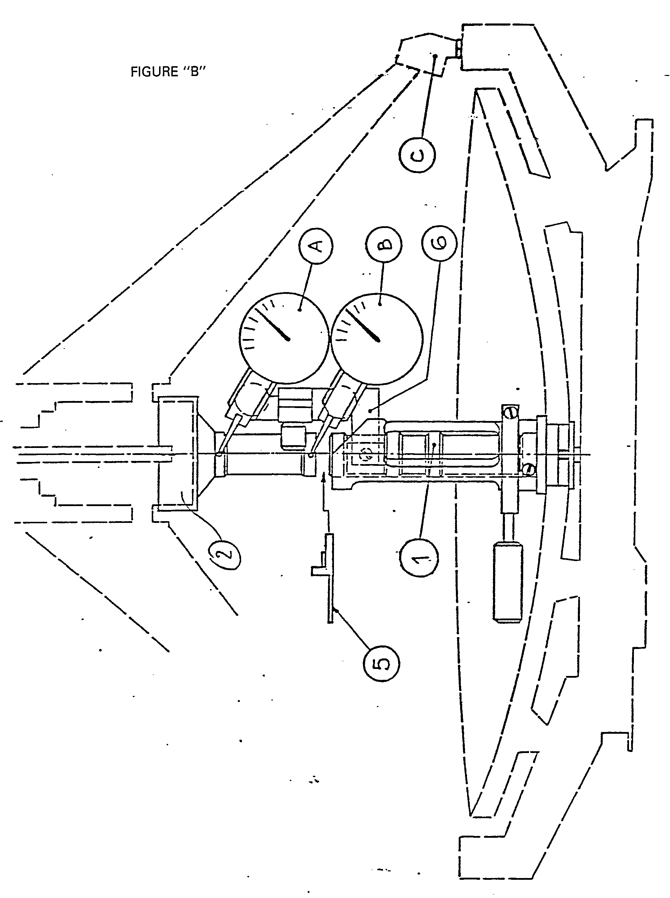

The details of a preferred embodiment of the invention are more fully set forth below with reference to the drawing in which:

Fig. A shows a general structure of paraboloid and feed together with the first set of devices for coarse positioning, and

Fig. B shows the antenna structure of Fig. A together with the further set of devices for precise positioning.

Figure A represents a complete antenna in the phase of a first positioning (coarse positioning). On the paraboloid, a first cylindrical column 1 complete with a cylindrical sleeve 3 shifted downwards is mounted, while on the feed is mounted a second cylindrical column 2. On shifting upwards sleeve 3, a spacer element 4 is inserted. With this operation, the positioning of the feed with both the centering of the axes as well as the focal distance imposed by the cylindrical sleeve 3 and by the spacer element 4 is already obtained in a coarse manner. The operation can be defined as correct when the cylindrical sleeve 3 succeeds in rotating about itself and the spacer element 4 is not found to be free in the axial movement. This is obtained by the adjustment of known adjusting members C of the feed support.

Figure B represents the same antenna together with the equipment necessary for the second phase positioning, namely, fine adjustment. By temporarily disassembling column 1, shown in Figure A, sleeve 3 and spacer element 4 are removed, these also appear in Figure A and replaced by a distance gauge 5 and by a mounting member 6 for comparators A and B.

The mounting member 6, which holds the comparators A and B, is free to rotate on column 1 with tight or frictional coupling for eliminating the radial play around the axis of column 1. The fine adjustment for the coincidence of the axes is realized by acting on the adjusting members C of the feed support until rotating the mounting member 6 on the column 1, the dials of the comparators A and B represent a shift which does not exceed predetermined tolerances.

Simultaneously, the adjustment for the focal distance, still acting on the adjusting members C of the feed support is realized by inserting the "go, no-go" gauge 5.

The overall system realizes:

a) a test system for verifying the positioning and alignment after the different testing phases: vibration, shock, technical tests, electrical tests;

b) repetitive assembly system after possible antenna disassembly;

c) an antenna assembly system with an immediate obtainment of high precision of two axes and the positioning of two distant points.

In this way, the above-mentioned functions are realized in a more economic way, more rapidly, without the need of having large spaces available.

With this system it is possible to operate on site without having to transfer the antenna into halls equipped for optical alignment.

The system even though utilizing a mechanical type equipment, leaves complete freedom to the two elements which have to be aligned and does not leave residual tensions once the aligning equipment is removed.

## Claims

1. Mechanical system for the adjustment of the axial distance and for the axial alignment of a feed with respect to a parabolic antenna, characterised by a set of devices for coarse positioning comprising a first cylindrical column (1) to be mounted on the antenna in a position coaxial with the axis of the parabolic antenna, a second cylindrical column (2) to be mounted on the feed in a position coaxial with the axis of the feed, a cylindrical sleeve (3) telescopically slidable on said columns and a spacer element (4) which, together with said sleeve (3), determines roughly the desired axial distance between the feed and the antenna, and by a further set of devices for precise positioning comprising two micrometric gauges (A, B).

2. Mechanical system according to claim 1, characterised by the further set of devices for precise positioning including a mounting member (6) holding said two micrometric gauges (A, B), the gauges having respective calipers, which member (6) is, in use, substituted for said cylindrical sleeve (3) and is mounted rotatably around the axis of said first column (1), the calipers of said gauges (A, B) contacting the outer surface of said second column (2) in two axially spaced points, and including further an axial distance gauge (15) which, in use, is substituted for said spacer element (4) and is inserted between said first and said second column.

## Patentansprüche

1. Mechanische Einrichtung zum Einstellen des axialen Abstandes und der koaxialen Ausrichtung eines Einspeisers bezüglich einer Parabolantenne, gekennzeichnet durch einen Gerätesatz zur Grobeinstellung mit einer ersten, zylindrischen Säule (1) für die Befestigung an der Antenne in einer zur Antennenachse koaxialen Stellung, mit einer zweiten, zylindrischen Säule (2) für die Befestigung am Einspeiser in einer zu dessen Achse koaxialen Stellung, mit einer teleskopisch auf den beiden Säulen verschiebbaren, zylindrischen Hülse (3) und mit einem Abstandselement (4), das gemeinsam mit der Hülse (3) den gewünschten axialen Abstand zwischen dem Einspeiser und der Antenne grob bestimmt, und durch einen weiteren Gerätesatz mit zwei Feinmeßgeräten (A, B) zur Feineinstellung.

2. Mechanische Einrichtung nach Anspruch 1, dadurch gekennzeichnet, daß der weitere Gerätesatz zur Feineinstellung ein Befestigungsorgan (6) aufweist, das die beiden mit Tastern ausgerüsteten Feinmeßgeräte (A, B) hält und das bei seinem Einsatz die zylindrische Hülse (3) ersetzt und um die Achse der ersten Säule (1) drehbar gelagert ist, wobei die Fühler der beiden Feinmeßgeräte (A, B) die Außenseite der zweiten Säule (2) an zwei axial zueinander beabstandeten Stellen berühren, und daß der zweite Gerätesatz ferner ein Abstandmeßorgan (5) aufweist, das bei seinem Einsatz das Abstandselement (4) ersetzt und zwischen die erste und die zweite Säule eingesetzt ist.

## Revendications

1. Dispositif mécanique pour le réglage de la distance axiale et pour l'alignement axial d'un feeder par rapport à une antenne parabolique, caractérisé par un ensemble de dispositifs pour un positionnement grossier comprenant une première colonne cylindrique (1) susceptible d'être montée sur l'antenne dans une position coaxiale avec l'axe de l'antenne parabolique, une seconde colonne cylindrique (2) susceptible d'être montée sur le feeder dans une position coaxiale avec l'axe du feeder, un manchon cylindrique (3) susceptible de coulisser télescopiquement sur lesdites colonnes et un organe d'espacement (4) qui, avec ledit manchon (3), détermine grossièrement la distance axiale désirée entre le feeder et l'antenne, et par un second ensemble de dispositifs pour un positionnement précis comprenant deux jauges micrométriques (A, B).

2. Système mécanique selon la revendication 1, caractérisé par le fait que l'autre ensemble de dispositifs pour le positionnement précis comprend un organe de montage (6) supportant lesdites deux jauges micrométriques (A, B), les jauges possédant des calibres respectifs, ledit organe (6) étant en utilisation substitué audit manchon cylindrique (3) et étant monté rotatif autour de l'axe de ladite première colonne (1), les calibres desdites jauges (A, B) étant en contact avec la surface extérieure de ladite deuxième colonne (2) en deux points espacés axialement, et en ce qu'il comprend en outre une jauge de distance axiale (5) qui, en utilisation est substituée audit élément d'espacement (4) et est insérée entre lesdites première et seconde colonnes.

FIGURE "A"

FIGURE "B"